# FASCICULE DE BREVET EUROPEEN

(11) **EP 1 479 203 B1**
(45) Date de publication et mention de la délivrance du brevet: **28.05.2008**
(21) Numéro de dépôt: 03718872.9
(22) Date de dépôt: 14.02.2003
(51) Int. Cl.: H04L 12/56

(54) **CORRELATION DES REQUETES EN QUALITE DE SERVICE**
KORRELATION VON DIENSTGÜTEANFORDERUNGEN
QUALITY OF SERVICE REQUEST CORRELATION

(30) Priorité: 21.02.2002 FR 0202208
(43) Date de publication de la demande: 24.11.2004
(73) Titulaire: Alcatel Lucent, 75008 Paris (FR)
(72) Inventeur: COUTURIER, Alain, F-92320 Chatillon (FR)
(74) Mandataire: Chaffraix, Sylvain
(86) Numéro de dépôt international: PCT/FR2003/000476
(87) Numéro de publication internationale: WO 2003/071747

(56) Documents cités:
- WO-A-01/91389
- WO-A-98/47165
- US-A- 5 674 003
- HENG-CHI SU ET AL: "Multicast provision in a differentiated services network" IEEE CONFERENCE PROCEEDINGS ARTICLE, 2001, pages 189-196, XP010534271
- GUERING R ET AL: "Aggregating RSVP-based QoS Requests, Internet Draft" INTERNET DRAFT, 21 novembre 1997 (1997-11-21), XP002237924 Extrait de l'Internet: <URL:http://www.citeseer.nj.nec.com/guerin g97aggregating.html> [extrait le 2003-04-10]

## Description

La présente invention est relative aux réseaux de données, notamment aux réseaux de télécommunication. Elle concerne la gestion de la qualité de service sur de tels réseaux. Elle s'applique particulièrement bien aux réseaux dits de nouvelle génération, c'est-à-dire aux réseaux permettant la fourniture de différentes sortes de services, comme par exemple, la transmission de la voix, de vidéos, de données, etc. Un tel réseau par exemple être un réseau basé sur les protocoles de la famille TCP/IP (*Transport Control Protocol* / *Internet Protocol*).

Plus précisément, l'invention concerne la phase de création d'une session d'un de ces services.

En effet, certains réseaux, tels Internet, ont été prévus pour transmettre des données, mais ni de la voix, ni de la vidéo, par exemple. Au sein d'Internet, les transmissions de données sont effectuées sous la forme de paquets, chaque paquet étant acheminé vers sa destination indépendamment des autres paquets. Chaque paquet est classiquement associé à un 5-tuples : protocole utilisé, adresse et port de l'émetteur, adresse et port du destinataire.

On entend habituellement par microflux, un ensemble de paquets qui ont le même 5-tuple ou au moins le même 4-tuple dans le cas où les paquets ne mentionnent pas le port de l'émetteur. Dans la suite, le terme microflux englobe ces deux possibilités.

Certains services nécessitent la réservation expresse de ressources au sein du réseau. Cette réservation de ressources permet de garantir, une qualité de service pour la session de service.

Cette réservation de ressources peut impliquer un contrôle de certains éléments du réseau (par exemple, « provisionnement » ou paramétrage, de ces éléments). Ce contrôle peut consister à effectivement réserver des ressources dans les noeuds (ou routeurs), ou bien autoriser la transmission des microflux concernés au niveau d'un routeur de bord (edge router), voire simplement à calculer si la configuration des éléments de réseau et leur utilisation permettent de transporter un nouveau microflux (ce mécanisme est communément appelé contrôle d'admission).

Pour ce faire, on associe généralement au réseau de données, un Dispositif de contrôle de réseau, notamment en charge de faire du contrôle d'admission, et, le cas échéant, de mettre en oeuvre effectivement le provisionnement ou paramétrage dans le réseau géré.

Cette première étape consiste généralement à une vérification administrative de droits, c'est-à-dire principalement à répondre à la question : est-ce que la session de service demandée correspond à ce qui est autorisé pour le client et pour le fournisseur du service ?

La seconde étape, mise en oeuvre dans le cas où il a été répondu favorablement à cette question, consiste alors à contrôler le ou les éléments de réseau pour permettre la bonne transmission des microflux concernés par la session de service.

Afin de déterminer quels sont ces éléments de réseau impactés, le système de gestion de réseau doit déterminer le chemin qui vont être emprunté par les paquets de données correspondant à la session de service, dans le réseau.

Toutefois, une même session de service peut impliquer plusieurs microflux de paquets. Par exemple, un service de vidéophonie entre deux interlocuteurs A et B nécessite 4 microflux de paquets :
- un microflux allant de A vers B et transportant des données vocales,
- un microflux allant de A vers B et transportant des données de vidéo,
- un microflux retour allant de B vers A et transportant des données vocales, et,
- un microflux retour allant de B vers A et transportant des données de vidéo.

Dans ce cadre, les systèmes de contrôle du réseau vont effectuer 4 fois ce travail de détermination du chemin, et vont déclencher 4 fois le processus de contrôle des éléments de réseau.

Le but de l'invention est d'éviter cette redondance des tâches effectuées par le système de contrôle du réseau.

Le document XP 2 237 924 "Aggregating RSVP-based Qos Requests" GUERING divulgue l'aggregation de requêtes, mais ne traite pas des requêtes de qualité correspondant à des microflux de paquets.

Pour ce faire, l'invention a pour objet un système de contrôle d'un réseau de données, possédant des moyens pour recevoir des requêtes de qualité de service, correspondant à des microflux de paquets, et des moyens de contrôle pour contrôler des éléments de ce réseau de données. Ce système de contrôle se caractérise en ce qu'il dispose de moyens pour mettre en corrélation les requêtes de qualité de service, et en ce que les moyens de contrôle effectuent le contrôle en une seule fois, pour toutes les requêtes de qualité de services corrélées.

L'invention a pour autre objet un dispositif de contrôle d'un réseau de données, possédant des moyens pour recevoir des requêtes de qualité de service, correspondant à des microflux, et des moyens de communication avec un contrôleur d'admission pour réserver les ressources requises au sein du réseau de données. Le dispositif de contrôle se caractérise en ce qu'il dispose de moyens pour mettre en corrélation les requêtes de qualité de service, et en ce qu'il transmet au contrôleur d'admission une unique requête en réservation de ressources, pour toutes les requêtes de qualité de service corrélées.

L'invention a pour troisième objet un contrôleur d'admission associé à un domaine d'un réseau de données, possédant des moyens pour recevoir une unique requête en réservation de ressources correspondant à des requêtes en qualité de service corrélées, et des moyens de contrôle pour contrôler des éléments de ce domaine. Ce contrôleur d'admission se caractérise en ce qu'il dispose de surcroît de moyens pour communiquer cette unique requête en réservation de ressources, au contrôleur d'admission associé à un second domaine du réseau de données.

Ainsi, la détermination du chemin le contrôle des éléments de réseau peuvent être déclenchés une seule fois, pour l'ensemble des microflux correspondant à des requêtes en qualité de service corrélées, d'une session de service. Ceci permet donc de minimiser les ressources de traitement nécessaires à ces tâches, à l'intérieur du système ou dispositif de contrôle du réseau. Il en résulte que ce dernier peut être plus efficace dans le traitement des requêtes en qualité de service ou de réservation de ressources et/ou qu'il peut être dimensionné plus modestement par rapport à ceux de l'état de la technique.

Selon une mise en oeuvre de l'invention, le contrôle des éléments de réseau peut être réalisé, pour toutes les requêtes de réservation de ressources corrélées, de façon atomique.

Ainsi, on évite un inconvénient supplémentaire des systèmes de contrôle de l'état de la technique : si une requête en réservation de ressources correspondant à une session de service ne peut pas être satisfaite (parce qu'il n'existe plus suffisamment de ressources disponibles, par exemple), alors on doit considérer ou reconsidérer toutes les autres requêtes de réservation de ressource correspondant à la même session de service. Si la politique imposée au dispositif de contrôle du réseau est d'établir les microflux de paquets correspondant à une session de service qu'en « tout ou rien », alors le dispositif de contrôle du réseau doit supprimer les effets des opérations de contrôle précédemment effectuées pour cette session de service (Ce mécanisme est connu sous le terme de « *rollback* » ou retour en arrière). De tels retours en arrière sont bien évidemment pénalisant puisqu'ils engendrent des opérations inutiles.

L'invention permet donc, selon une de ses mises en oeuvre, de palier cet inconvénient en traitant toutes requêtes en réservation de ressources, de façon atomique.

L'invention et d'autres de ses avantages apparaîtront de façon plus claire, dans la description qui va suivre en liaison avec les figures annexées.
La figure 1 illustre un premier mode de réalisation de l'invention.
La figure 2 illustre un second mode de réalisation de l'invention.

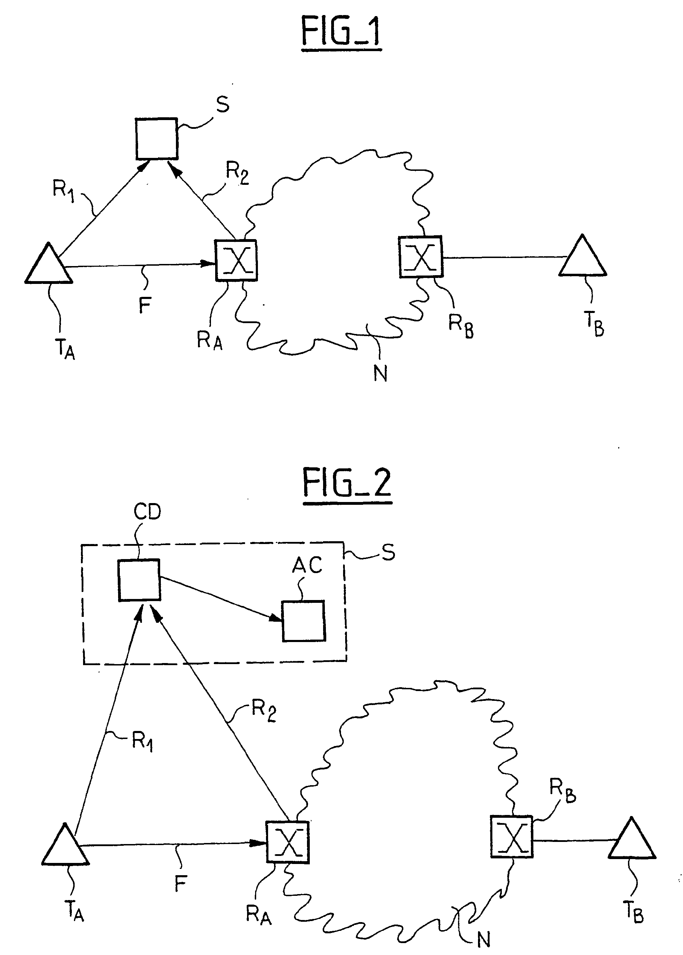

La figure 1 illustre un exemple d'un réseau de données. Un terminal T_{A} souhaite établir une session de service avec le terminal T_{B}, au travers du réseau de données N. Cette session de service est associée au moins à la transmission d'un ou plusieurs microflux de données F, provenant du terminal T_{A}. Afin de permettre la réservation de ressources, pour chaque microflux de données, une requête en réservation de ressource est transmise au système de contrôle, en charge de la gestion de ce réseau de données N.

Par exemple, à une même session de service peuvent être associés deux microflux de paquets : un microflux de paquets transportant de la voix, et un microflux de paquets transportant de la vidéo.

Le système de contrôle S dispose de moyens pour corréler les requêtes de réservation de ressources qui lui sont transmis.

Une telle corrélation peut notamment être réalisée en comparant les 5-tuples identifiant les deux microflux.

Plus particulièrement, elle peut consister à comparer les adresses IP de l'émetteur et du destinataire : si celles-ci sont identiques, alors les deux microflux sont considérés comme étant corrélés. Dans la suite, on pourra désigner les microflux corrélés par la terminologie « microflux adjacents ».

Selon une mise en oeuvre de l'invention, le système de contrôle S peut anticiper sur l'acceptation de l'établissement de la session de service : si la session de service est effectivement établie, alors deux microflux de paquets supplémentaires, par exemple, vont devoir transiter par le réseau N :
- un microflux de paquets transportant de la voix, partant du terminal T_{B} et aboutissant au terminal T_{A}, et
- un microflux de paquets transportant de la vidéo, partant de terminal T_{B} et aboutissant au terminal T_{A}.

Sachant que l'établissement de ces microflux de paquets de retour a une probabilité importante d'être réalisé, le système de contrôle S peut être prévu pour anticiper cet établissement. Cette mise en oeuvre est particulièrement intéressante lorsque le système de contrôle ne considère qu'un seul domaine, c'est-à-dire lorsqu'on peut avoir une certaine assurance que les microflux de retour passeront par le même chemin.

Le système de contrôle S dispose de surcroît de moyens de contrôle, pour effectivement réaliser le contrôle des équipements de réseau concernés (c'est-à-dire pour réaliser la réservation des ressources nécessaires).

Cette étape de contrôle peut éventuellement être précédée d'une étape de contrôle d'admission. Cette étape de contrôle d'admission consiste à vérifier que l'émetteur des requêtes en qualité de service possède bien les droits administratifs pour effectuer cette réservation de ressources.

Selon l'invention, cette étape de contrôle d'admission peut être effectuée en une seule fois, pour toutes les requêtes en qualité de service adjacentes (i.e. précédemment corrélées.)

Ensuite, les moyens de contrôle du système de contrôle S mettent en oeuvre une étape de détermination du chemin que les microflux de paquets vont prendre au sein du réseau N. Il s'agit là d'une simulation du routage que vont mettre en oeuvre les différents éléments du réseau N traversés par les flots de paquets.

Selon l'invention, cette simulation n'est effectuée aussi qu'une seule fois pour l'ensemble des microflux adjacents.

Selon une mise en oeuvre de l'invention, le contrôle des éléments de réseau (pour la réservation effective des ressources) est réalisé de façon atomique : les ressources sont réservées si et seulement si l'ensemble des requêtes en réservation de ressources peuvent être satisfaites.

Selon une autre mise en oeuvre, bien que la réservation de ressources soit effectuée en une seule fois, uniquement une partie des requêtes en qualité de service peut être satisfaite. Certains microflux pourront être correctement transmis, tandis que d'autres microflux, adjacent au premier, ne pourront pas l'être ou pas correctement.

Il peut être prévu que le choix d'un ou l'autre de ces mécanismes soit effectué par le positionnement d'un paramètre.

Chaque requête en qualité de service peut être associée à une bande passante demandée.

Selon une mise en oeuvre de l'invention, le système de contrôle S peut être prévu pour traiter le cas où les différents microflux de paquets corrélés doivent se partager une même bande passante. Par exemple, deux microflux adjacents peuvent se partager à eux-deux 100 kbits/secondes, ce qui est particulièrement intéressant dans le cas d'un terminal ayant deux microflux émettant alternativement jusqu'à 100 kbits/secondes.

Selon un mode de réalisation de l'invention, la transmission des résultats des moyens de corrélation vers les moyens de contrôle peut être décrite au moyen d'une interface IDL (*Interface Description Language*), telle que définie par l'OMG (*Object Management Group*).

Un exemple d'une telle interface IDL peut être comme suit :

```
      enum mode {AllOrNothing, BestEffort}
      struct microflow {t_mfID         id ;
                        t_lPaddress    originIP ;
                        t_PortNumber   portOrig ;
                        t_lPaddress    destIP ;
                        t_PortNumber   portDest ;
                        int            Protocol ;
                        t_QoS          qos} ;
      typedef sequence<microFlow> AdjacentMicroFlowList ; //same IP
 addresses
      resultReservation reserveQoS(in AdkacentMicroFlowList list,
                                      in Mode mode)
                                      raises (ReservationException) ;
```

La figure 2 illustre un second mode de réalisation de l'invention. Selon ce mode de réalisation, les moyens de contrôle sont distants des moyens de corrélation.

La figure 2 reprend la plupart des éléments de la figure 1.

Toutefois, le système de contrôle S est réparti entre un dispositif de contrôle CD comportant les moyens de corrélation, et un contrôleur d'admission AC comportant les moyens de contrôle.

Le dispositif de contrôle CD peut par exemple être un commutateur logiciel communément appelé « Softswitch », un dispositif connu sous le nom de « SIP proxy » etc.

Le dispositif de contrôle CD a pour rôle habituel d'être le point d'entrée des requêtes en réservation de ressources concernant le réseau N, et d'effectuer un contrôle d'admission de type administratif tel que décrit précédemment. Selon l'invention, il dispose de surcroît de moyens pour corréler les requêtes en réservation de ressources. Le fonctionnement de ces moyens de corrélation est identique à celui des moyens de corrélation décrit dans l'exemple de réalisation illustré par la figure 1.

Le contrôleur d'admission AC peut être mis en oeuvre sous la forme d'un module logiciel indépendant, situé sur un même système de traitement que le dispositif de contrôle CD, ou bien sur un système distant. Ils peuvent communiquer au moyen d'un protocole de communication.

Le dispositif de contrôle CD dispose pour ce faire de moyens de communication avec le contrôleur d'admission AC. Il peut ainsi lui transmettre une unique requête en réservation de ressources pour l'ensemble des requêtes en réservation de ressources corrélées.

Dans le cas particulier d'un implémentation selon les standards du 3GPP, le Dispositif de contrôle peut être un P-CSCF pour « *Proxy Call Session Control Function*), tel que décrit dans le document « *3GPP TS 23.225, IP Multimedia Subsystem* ». Le contrôle d'admission AC peut, quant-à-lui, être le PCF (*Policy Control Function*).

Selon un mode de réalisation de l'invention, le contrôleur d'admission AC et le dispositif de contrôle CD peuvent communiquer au moyen du protocole COPS tel que définit dans le RFC 2748 de l'IETF (*Internet Engineering Task Force*). Tout autre protocole de signalisation peut bien sûr être également utilisé, notamment celui issu du groupe de travail NSIS (*Next-Step In Signalling*) de l'IETF.

Il peut être prévu, dans le protocole utilisé, qu'un paramètre permette de spécifier si le contrôle des éléments de réseau doit être ou non réalisé de façon atomique.

Dans le cadre d'un réseau multi-domaine, chaque domaine peut être associé à un contrôleur d'admission. En ce cas, il peut être prévu que les contrôleurs d'admission puissent communiquer entre eux.

Le premier contrôleur d'admission, c'est-à-dire celui qui a reçu une requête de qualité de service correspondant à des microflux corrélés, de la part d'un dispositif de contrôle CD, peut alors communiquer cette requête unique au contrôleur d'admission concerné. Cette communication est faite en une seule fois, pour l'ensemble des microflux corrélés.

Les contrôleurs d'admission disposent alors de moyens pour communiquer l'unique requête en réservation de ressources, au contrôleur d'admission associé à un second domaine du réseau de données.

L'interface et/ou les protocoles mis en oeuvre pour permettre la communication entre les contrôleurs d'admission. Ce protocole peut par exemple être un protocole issu du groupe de travail NSIS (*Next* Step *In Signalling*) de l'IETF, précédemment évoqué.

## Revendications

1. Système de contrôle d'un réseau de données, possédant des moyens pour recevoir des requêtes de qualité de service, correspondant à des microflux de paquets, et des moyens de contrôle pour contrôler des éléments dudit réseau de données en réservant les ressources nécessaires pour lesdits microflux de paquets, **caractérisé en ce qu'**il dispose de moyens pour mettre en corrélation les requêtes de qualité de service correspondant à des microflux de paquets d'une même session de service, et **en ce que** les moyens de contrôle effectuent ledit contrôle en une seule fois, pour toutes les requêtes de qualité de services corrélées.

2. Système de contrôle selon la revendication 1 dans lequel la corrélation est effectuée en comparant les 5-tuples desdits microflux, lesdits 5-tuples étant formés du protocole utilisé, des adresses et ports de l'émetteur et du destinataire, associés aux paquets desdits microflux.

3. Système de contrôle selon la revendication 2, dans lequel la corrélation est effectuée en comparant les adresses de l'émetteur et du destinataire.

4. Système de contrôle selon l'un des revendications précédentes, dans lequel lesdits moyens de réservation forment un module logiciel distant desdits moyens de corrélation, communiquant avec lui par un protocole de communication.

5. Système de contrôle selon l'une des revendications précédentes, dans lequel ledit contrôle des éléments de réseau peut être réalisé de façon atomique.

6. Système de contrôle selon l'une des revendications précédentes, dans lequel, préalablement audit contrôle des éléments de réseau, les moyens de contrôle sont prévus pour réaliser un contrôle d'admission.

7. Système de contrôle selon l'une des revendications précédentes, dans lequel les moyens de contrôle sont prévus pour que lesdites requêtes en réservation corrélées se partage une même bande passante.

8. Système de contrôle selon l'une des revendications précédentes, dans lequel les moyens de corrélation sont aptes à anticiper des flots de paquets de retour et à les considérer pour déterminer les requêtes en réservation de ressources corrélées.

9. Dispositif de contrôle (CD) d'un réseau de données (N), possédant des moyens pour recevoir des requêtes de qualité de service, correspondant à des microflux, et des moyens de communication avec un contrôleur d'admission (AC) pour réserver les ressources requises au sein dudit réseau de données, **caractérisé en ce qu'**il dispose de moyens pour mettre en corrélation les requêtes de qualité de service correspondant à des microflux de paquets d'une même session de service, et **en ce qu'**il transmet au contrôleur d'admission une unique requête en réservation de ressources, pour toutes les requêtes de qualité de service corrélées.

10. Dispositif de contrôle selon la revendication 9 dans lequel la corrélation est effectuée en comparant les 5-tuples desdits microflux, lesdits 5-tuples étant formés du protocole utilisé, des adresses et ports de l'émetteur et du destinataire, associés aux paquets desdits microflux.

11. Dispositif de contrôle selon la revendication 10, dans lequel la corrélation est effectuée en comparant les adresses de l'émetteur et du destinataire.

12. Dispositif de contrôle selon l'un des revendications 9 à 11, dans lequel lesdites requêtes en qualité de service corrélées peuvent se partager une même bande passante.

13. Dispositif de contrôle selon l'un des revendications 9 à 12, dans lequel les moyens de corrélation sont aptes à anticiper des microflux de retour et à les considérer pour déterminer les requêtes en qualité de service corrélées.

14. Contrôleur d'admission associé à un domaine d'un réseau de données (N), **caractérisé par** des moyens pour recevoir une unique requête en réservation de ressources correspondant à des requêtes en qualité de service corrélées correspondant à des microflux de paquets d'une même session de service, des moyens de contrôle pour contrôler des éléments dudit domaine en réservant les ressources nécessaires pour lesdits microflux de paquets, et des moyens pour communiquer ladite unique requête en réservation de ressources, au contrôleur d'admission associé à un second domaine dudit réseau de données.

## Claims

1. System for controlling a data network, comprising means for receiving quality of service requests corresponding to microflows of packets and control means for controlling elements of said data network by reserving the resources needed for said microflows of packets, which system is **characterised in that** it comprises means for correlating the quality of service requests corresponding to microflows of packets from the same service session, and **in that** the control means effect said control once only for all the correlated quality of service requests.

2. Control system according to claim 1, wherein the correlation is effected by comparing the 5-tuples of said microflows, said 5-tuples being formed from the protocol used, and addresses and ports of the sender and addressee, associated with the packets of said microflows.

3. Control system according to claim 2, wherein the correlation is effected by comparing the addresses of the sender and the addresses.

4. Control system according to any preceding claim, wherein said reservation means form a software module remote from said correlation means and communicating therewith by means of a communication protocol.

5. Control system according to any preceding claim, wherein said network elements may be monitored atomically.

6. Control system according to any preceding claim, wherein the control means are adapted to perform admission control prior to controlling said network elements.

7. Control system according to any preceding claim, wherein the control means are such that said correlated reservation requests share the same bandwidth.

8. Control system according to any preceding claim, wherein the correlation means are adapted to anticipate flows of return packets and to consider them to determine the correlated resource reservation requests.

9. Control device (CD) of a data network (N), comprising means for receiving quality of service requests corresponding to microflows and means for communicating with an admission controller (AC) for reserving the required resources within said data network, **characterised in that** it comprises means for correlating the quality of service requests corresponding to microflows of packets from the same service session, and **in that** it transmits a single resource reservation request to the admission controller for all the correlated quality of service requests.

10. Control device according to claim 9 wherein the correlation is effected by comparing the 5-tuples of said microflows, said 5-tuples being formed from the protocol used, and addresses and ports of the sender and addressee, associated with the packets of said microflows.

11. Control device according to claim 10, wherein the correlation is effected by comparing the addresses of the sender and the addressee.

12. Control device according to any of claims 9 to 11, wherein said correlated quality of service requests may share the same bandwidth.

13. Control device according to any of claims 9 to 12, wherein the correlation means are adapted to anticipate return microflows and to consider them to determine the correlated quality of service requests.

14. Admission controller associated with a domain of a data network (N), **characterised by** means for receiving a single resource reservation request corresponding to correlated quality of service requests corresponding to microflows of packets from the same service session, control means for controlling elements of said domain by reserving the resources needed for said microflows of packets, and means for communicating said single resource reservation request to the admission controller associated with a second domain of said data network.

## Patentansprüche

1. System zur Steuerung eines Datennetzes mit Möglichkeiten des Empfangs von Leistungsabfragen entsprechend den Mikroströmen von Paketen und Mittel zur Steuerung, um Elemente des Datennetzes zu steuern, wobei ausreichend Ressourcen für die Mikroströme von Paketen zurück gehalten werden, **dadurch gekennzeichnet, dass** es über Mittel verfügt, um eine Korrelation zwischen den Leistungsabfragen herzustellen, die den Mikroströmen von Paketen einer und der gleichen Leistungsverbindung entsprechen und, dass die Mittel zur Steuerung diese Steuerung in einem einzigen Vorgang für alle korrelierenden Leistungsabfragen durchführen.

2. System zur Steuerung nach Anspruch 1, in dem die wechselwirkung durch Vergleich des Fünffachen der Mikroströme hergestellt wird, wobei die Fünffachen aus dem verwendeten Protokolls, den Adressen, und Ausgängen des Absenders und des Empfängers bestehen, die mit den Paketen der Mikroströme in Verbindung stehen.

3. System zur Steuerung nach Anspruch 2, in dem die Korrelation durch Vergleich der Adressen des Absenders und des Empfängers erfolgt.

4. System zur Steuerung nach einem der vorstehenden Anspruche, bei dem die Mittel zur Reservierung ein Softwaremodul bilden, das von den Korrelationsmitteln entfernt ist und mit diesem über ein Kommunikationsprotokoll kommuniziert.

5. System zur Steuerung nach einem der vorstehenden Ansprüche, bei dem die Steuerung der Netzwerkelemente atomar erfolgen kann.

6. System zur Steuerung nach einem der vorstehenden Ansprüche, bei dem vor der Steuerung der Netzwerkelemente die Mittel zur Steuerung dafür vorgesehen sind, eine Zugangskontrolle durchzuführen.

7. System zur Steuerung nach einem der vorstehenden Ansprüche, bei dem die Mittel zur Steuerung dafür vorgesehen sind, dass die in Korrelation stehenden Abfragen ein und die gleiche Bandbreite teilen.

8. System zur Steuerung nach einem der vorstehenden Ansprüche, bei dem die Korrelationsmittel dazu geeignet sind, die zurück fließenden Paketströme vorwegzunehmen und abzuwägen, um die Reservierungsanfragen der korrelierende Ressourcen zu bestimmen.

9. Mittel zur Steuerung (CD) eines Datennetzwerks (N), das über Mittel zum Empfang von Leistungsabfragen verfügt, die Mikroströmen entsprechen und Kommunikationsmittel mit einer Zugangskontrolle (AC), um die erforderlichen Ressourcen innerhalb des Datennetzes zu reservieren, **dadurch gekennzeichnet, dass** es über Mittel verfügt, um die Leistungsabfragen, die Mikroströmen von Paketen ein und der gleichen Sitzung entsprechen, in Korrelation zu setzen und, dass es der Zugangskontrolle eine einzige Anfrage zur Reservierung von Ressourcen für alle in Korrelation stehenden Leistungsabfragen übermittelt.

10. Mittel zur Steuerung nach Anspruch 9, bei dem die Korrelation durch Vergleich des Fünffachen der Mikroströme erfolgt, wobei dieses Fünffache aus dem verwendeten Protokoll, Adressen und Ausgängen des Absenders und Empfängers in Verbindung mit den Mikroströmen besteht.

11. Mittel zur Steuerung nach Anspruch 10, bei dem die Korrelation durch Vergleich der Adressen des Absenders und des Empfängers erfolgt.

12. Mittel zur Steuerung nach einem der Ansprüche 9 bis 11, bei dem die korrelierten Leistungsabfragen eine und die gleiche Bandbreite teilen können

13. Mittel zur Steuerung nach einem der Ansprüche 9 bis 12, bei dem die Korrelationsmittel in der Lage sind, die rückfließenden Mikroströme vorwegzunehmen und zu betrachten, um die korrelierenden Leistungsabfragen zu bestimmen.

14. Zugangskontrolle in Verbindung mit einer Domäne eines Datennetzes (N), **gekennzeichnet durch** Mittel zum Empfang einer einzigen Anfrage zur Reservierung von Ressourcen, die korrelierenden Leistungsabfragen entspricht, die Mikroströmen von Paketen einer und der gleichen Sitzung, Mittel zur Steuerung, um die Elemente der Domäne zu kontrollieren, wobei die erforderlichen Ressourcen für die Mikroströme von Paketen reserviert werden und Mittel zur Kommunikation der einzigen Anfrage zur Reservierung von Ressourcen an die Zugangskontrolle, die mit einer zweiten Domäne des Datennetzes verbunden ist.
